# EUROPEAN PATENT APPLICATION

(11) **EP 4 425 610 A1**
(43) Date of publication of application: **04.09.2024**
(21) Application number: 22886549.9
(22) Date of filing: 26.09.2022
(51) Int. Cl.: H01M 4/38, C01B 32/21, C01B 33/113, H01M 4/13, H01M 4/139, H01M 4/1393, H01M 4/1395, H01M 4/36, H01M 4/48, H01M 4/58, H01M 4/587

(54) **PARTICLES AND METHOD FOR PRODUCING SAME, AND SECONDARY BATTERY AND METHOD FOR MANUFACTURING SAME**

(30) Priority: 27.10.2021 JP 2021175655
(71) Applicant: Mitsubishi Chemical Corporation, Chiyoda-ku Tokyo 100-8251 (JP)
(72) Inventor: ENATSU, Yuuki, Tokyo 100-8251 (JP); MARU, Naoto, Tokyo 100-8251 (JP); FUSE, Tooru, Tokyo 100-8251 (JP)
(74) Representative: Vossius & Partner Patentanwälte Rechtsanwälte mbB
(86) International application number: PCT/JP2022/035676
(87) International publication number: WO 2023/074216

(57) **Abstract**

Particles having a chromaticity b* of 2.0 or less, the particles comprising graphite (A) and particles (B) containing a silicon element. The chromaticity b* of the particles is preferably 0.2 or more and 1.1 or less, and the chromaticity a* of the particles is preferably 0.2 or more and 1.2 or less. A method for manufacturing a secondary battery including a positive electrode, a negative electrode, and an electrolyte, wherein the negative electrode comprises a current collector and a negative electrode active material layer disposed on the current collector, and the negative electrode active material layer contains the graphite.

## Description

### Technical Field

The present invention relates to particles having excellent battery characteristics as a negative electrode active material of a secondary battery and a method for producing the same, and a secondary battery using the particles as a negative electrode active material and a method for manufacturing the same.

### Background Art

There has been an increasing demand for high-capacity secondary batteries with reductions in the sizes of electronic devices.

Particular attention has been placed on nonaqueous secondary batteries in particular, lithium-ion secondary batteries that have a higher energy density than nickelcadmium batteries or nickel-hydrogen batteries and are excellent in terms of quick charge-discharge characteristic.

A nonaqueous lithium-ion secondary battery that includes positive and negative electrodes capable of occluding and releasing lithium ions and a nonaqueous electrolyte solution that contains a lithium salt, such as LiPF₆ or LiBF₄, dissolved therein has been developed and used.

Various materials have been proposed as negative electrode materials for this battery. As negative electrode materials, graphite carbon materials, such as natural graphite, artificial graphite produced by the graphitization of coke or the like, graphitized mesophase pitch, and graphitized carbon fibers, have been used because they increase capacity and enhance flatness of discharge potential.

In recent years, the use of nonaqueous secondary batteries, especially lithium-ion secondary batteries, has been expanded. For example, applications are being developed not only for conventional notebook computers, mobile communication devices, portable cameras, portable game machines, etc., but also for power tools, electric vehicles, etc. For this reason, nonaqueous secondary batteries are required to have more rapid charging and discharging performance than ever before. Furthermore, a lithium-ion secondary battery that has both high capacity and high cycle characteristics is desired.

However, in a carbon-centered negative electrode, since the theoretical capacity of carbon is 372 mAh, it is impossible to desire a capacity higher than this. Therefore, the application of various negative electrode materials having high theoretical capacity, especially metal particles, to the negative electrode has been attempted.

Patent Literature 1 discloses "Composite powder wherein the particles of the composite powder comprise silicon-based domains in a matrix, wherein the matrix is carbon or a precursor material that can be converted into carbon by thermal treatment, wherein the individual silicon-based domains are either free silicon-based domains that are not or not completely embedded in the matrix or are fully embedded silicon-based domains that are completely surrounded by the matrix, wherein the percentage of free silicon-based domains is lower than or equal to 4 weight% of the total amount of Si in metallic or oxidized state in the composite powder, wherein the silicon-based domains have a weight based size distribution with a dso of 200 nm or less and a dgo of 1000 nm or less."

Patent Literature 2 discloses "Powder comprising: particles including a matrix material; and silicon-based domains dispersed in this matrix material, wherein the matrix material is carbon or a material that can be thermally decomposed to carbon, wherein a part of the silicon-based domains are present in the form of agglomerates of silicon-based domains, wherein at least 98% of these agglomerates have a maximum size of 3um or less, or the silicon-based domains are not at all agglomerated into the agglomerates."

Patent Literature 3 discloses "A composite body comprising a porous body made of carbon or metal oxide and silicon introduced into the pores of the porous body."

[Patent Literature 1] JP 2018-500742 A
[Patent Literature 2] JP 2018-501620 A
[Patent Literature 3] JP 2016-132608 A

The inventors have obtained the following knowledge based on studies about a relationship between battery characteristics of secondary batteries and physical properties of particles as negative electrode active materials.

In applications as a negative electrode active material for secondary batteries, the chromaticity b* of particles represents the degree of compositeness of graphite and particles containing a silicon elements. Therefore, the chromaticity b* of the particles affects the battery characteristics. The lower the chromaticity b* of the particles used as the negative electrode active material, the better the battery characteristics tend to be.

The particles disclosed in Patent Literatures 1 and 2 have a large particle size and a small x of SiOx, so that they have a high chromaticity b*.

The particles disclosed in Patent Literature 3 have a high silicon filling rate and a large amount of silicon exposed outside the particles, so that they also have a high chromaticity b*.

Therefore, when any of the particles of Patent Literatures 1 to 3 is used as a negative electrode active material, the resulting secondary battery does not have sufficient battery characteristics.

### Summary of Invention

An object of the present invention is to provide particles that can be used as a negative electrode active material of a secondary battery to obtain a secondary battery having excellent battery characteristics.

The present inventors have found that certain particles can achieve low chromaticity b*, and that the particles can provide a secondary battery having excellent battery characteristics.

The gist of the present invention is as follows.
[1] Particles having a chromaticity b* of 2.0 or less, the particles comprising graphite (A) and particles (B) containing a silicon element.
[2] The particles according to [1], wherein the chromaticity b* is 1.1 or less.
[3] The particles according to [1] or [2], wherein the chromaticity b* is 0.2 or more.
[4] The particles according to any one of [1]to [3], having a chromaticity a* of 1.2 or less.
[5] The particles according to any one of [1]to [4], having a chromaticity a* of 0.2 or more.
[6] The particles according to any one of [1]to [5], wherein the particles (B) containing a silicon element have a d₅₀ of 0.3 µm or more.
[7] The particles according to any one of [1]to [6], wherein the particles (B) containing a silicon element are SiOx in which x is in the range of 0.5 to 1.5.
[8] The particles according to any one of [1]to [7], wherein the particles is used in a secondary battery.
[9] A method for producing particles having a chromaticity b* of 2.0 or less, comprising compositing graphite (A) and particles (B) containing a silicon element.
[10] The method for producing particles according to [9], wherein the graphite (A) and the particles (B) containing a silicon element are mixed and then subjected to a spheroidization treatment.
[11] A secondary battery including a positive electrode, a negative electrode, and an electrolyte,
   wherein the negative electrode comprises a current collector and a negative electrode active material layer disposed on the current collector, and
   wherein the negative electrode active material layer contains the particles according to any one of [1] to [8].
[12] A method for manufacturing a secondary battery including a positive electrode, a negative electrode, and an electrolyte,
   Wherein the method comprises a step of forming a negative electrode active material layer containing the particles according to any one of [1] to [8] on a current collector to produce the negative electrode.

### Advantageous Effects of Invention

By using the particles of the present invention containing graphite (A) and particles (B) containing a silicon element and having low chromaticity b* as a negative electrode active material of a secondary battery, a secondary battery is improved in battery characteristics thereof.

### Description of Embodiments

The present invention is described in detail below. The present invention is not limited by the following description. Various modifications may be made without departing from the spirit and scope of the present invention.

In the present invention, when a range is expressed using two numerical values or two physical properties with "to" interposed therebetween, the two numerical values or two physical properties before and after "to" are included in the range.

In the present invention, "chromaticity b*" and "chromaticity a*" are chromaticity b* and chromaticity a* in the L*a*b* color system. Chromaticity b* and chromaticity a* are values measured using a spectrophotometer in accordance with ISO7724/1.

In the present invention, "d₅₀" is the volume-average particle size. d₅₀ is a volume-based median diameter measured by laser diffraction/scattering particle size distribution measurement.

In the present invention, "d₉₀" is a particle size corresponding to cumulative 90% from the small particle side in the particle size distribution obtained when measuring d₅₀.

In the present invention, "dₘₐₓ" is the largest measured particle size of particles in the particle size distribution obtained when measuring d₅₀.

### [Particle]

The particles of the present invention include graphite (A) and particles (B) containing a silicon element (hereinafter sometimes referred to as "Si-containing particles (B)" or simply "particles (B)"). The chromaticity b* is 2.0 or less.

The reason why particles containing graphite (A) and Si-containing particles (B) and having a chromaticity b* of 2.0 or less exhibit excellent battery characteristics as a negative electrode active material of a secondary battery is considered as follows.

The chromaticity b* is considered to represent the degree of compositing of graphite (A) and Si-containing particles (B). That is, in particles having a small chromaticity b*, it is considered that graphite (A) and Si-containing particles (B) are in close contact, or the surfaces of graphite (A) and Si-containing particles (B) are uniformly covered. In such particles, Li alloying reaction and/or dealloying reaction to Si-containing particles (B) occur uniformly. For this reason, generation of cracks are prevented in the Si-containing particles (B) and deterioration is suppressed. Furthermore, since the reactivity between the Si-containing particles (B) and the electrolyte can be suppressed, the particles can exhibit excellent battery characteristics.

### <Graphite (A)>

Graphite (A), which is one of the constituent components of the particles of the present invention, is shown below as an example. As the graphite (A), known materials or commercially available products may be used.

### (Type of graphite (A))

Examples of graphite (A) include natural graphite in the form of scales, lumps, or plates, and artificial graphite produced by heating petroleum coke, coal pitch coke, coal needle coke, mesophase pitch, or the like to 2500°C or higher. The artificial graphite can be obtained by removing impurities, pulverizing, sieving, or classifying, if necessary. Among these graphites (A), natural graphite in the form of scales, lumps or plates is preferred, and natural graphite in the form of scales is more preferred, since it is low cost and has a high capacity.

Natural graphite is classified into flake-like graphite (Flake Graphite), scale-like graphite (Crystal Line (Vein) Graphite), and arthy graphite (Amorphous Graphite) on the basis of their properties (see the chapter "Graphite" of "Encyclopedia of powder process industry and technology" (published by Sangyo Gijyutsu Center Co., Ltd., Showa 49 (1974)) and "HANDBOOK OF CARBON, GRAPHITE, DIAMOND AND FULLERENES" (published by Noyes Publications)). The degree of graphitization is highest for scale-like graphite at 100%, followed by flake-like graphite at 99.9%. Therefore, it is preferable to use these graphites.

Flake-like graphite, which is natural graphaite, is produced in Madagascar, China, Brazil, Ukraine, Canada, etc. The production area of scale-like graphite is Sri Lanka. The main sources of arthy graphite are the Korean peninsula, China, Mexico, etc.

Among these natural graphites, flake-like graphite and scale-like graphite have advantages such as a high degree of graphitization and a low amount of impurities, so they can be preferably used in the present invention.

Visual methods to confirm that graphite is flaky include the following methods.
- Particle surface observation using a scanning electron microscope;
- After embedding the particles in resin to create a thin section of the resin and cutting out the cross section of the particle, or using a cross-section polisher to create a cross section of the coating film made of particles and cutting out the cross section of the particle, observe the particle cross section using a scanning electron microscope.

There are two types of flake-like graphite and scale-like graphite: natural graphite that has been highly purified so that the crystallinity of graphite exhibits near-perfect crystals, and graphite that has been artificially formed. Among these, natural graphite is preferred because it is soft and allows easy fabrication of folded structures.

### (Physical properties of graphite (A))

The preferred physical properties of graphite (A) in the present invention are as follows.

### • Volume-average particle size (d₅₀)

The d₅₀ of graphite (A) before being composited with Si-containing particles (B) is usually 1 µm or more and 120 µm or less, preferably 3 µm or more and 100 µm or less, and more preferably 5 um or more and 90 µm or less. When d₅₀ is within the above range, particles having low chromaticity b* can be produced by combining with Si-containing particles (B). When the d₅₀ of graphite (A) is equal to or greater than the above lower limit, it is possible to produce particles having a particle size within a range that allows an electrode to be constructed with an appropriate amount of binder. When the d₅₀ of graphite (A) is equal to or less than the above upper limit, in manufacturing a secondary battery, the generation of streaks and unevenness caused by large particles can be suppressed in the step of applying the particles as a slurry by adding a binder, water, and an organic solvent.

### • Particle size (d₉₀)

The d₉₀ of graphite (A) before being composited with Si-containing particles (B) is usually 1.5 um or more and 150 µm or less, preferably 4 um or more and 120 µm or less, and more preferably 6 µm or more and 100 µm or less. When the d₉₀ of graphite (A) is equal to or greater than the above lower limit, the composite of graphite (A) and Si-containing particles (B) can be efficiently progressed. When the d₉₀ of graphite (A) is equal to or less than the above upper limit, generation of large particles can be suppressed when graphite (A) and Si-containing particles (B) are composited.

### • Average aspect ratio

The average aspect ratio, which is the ratio of the length of the major axis to the minor axis of graphite (A), is usually 2.1 or more and 10 or less, preferably 2.3 or more and 9 or less, and more preferably 2.5 or more and 8 or less. When the aspect ratio is within the above range, it is possible to efficiently produce spherical particles. Further, when the aspect ratio is within the above range, minute voids are formed in the particles obtained, which can alleviate volumetric expansion due to charging and discharging and contribute to improving cycle characteristics.

In this specification, the aspect ratio is calculated as A/B using the longest diameter A of the particle when observed three-dimensionally using a scanning electron microscope and the shortest diameter B of the diameters perpendicular to the longest diameter A. The average aspect ratio is the average value of the aspect ratios of 50 arbitrary particles.

### • Tap density

The tap density of graphite (A) is usually 0.1 g/cm³ or more and 1.0 g/cm³ or less, preferably 0.13 g/cm³ or more and 0.8 g/cm³ or less, and more preferably 0.15 g/cm³ or more and 0.6 g/cm³ or less. When the tap density is within the above range, minute voids are likely to be formed within the resulting particles.

In this specification, the tap density is defined as the density determined using a powder density gage by dropping the particles into a cylindrical tap cell having a diameter of 1.5 cm and a volume of 20 cm³ to fully fill the cell with the particles, tapping the cell 1000 times with a stroke length of 10 mm, and calculating the density of the sample from the volume and mass of the sample.

### • Specific surface area by BET method

The specific surface area of graphite (A) by the BET method is usually 1 m²/g or more and 40 m²/g or less, preferably 2 m²/g or more and 35 m²/g or less, and more preferably 3 m²/g or more and 30 m²/g or less. The specific surface area of graphite (A) determined by the BET method is reflected in the specific surface area of the particles obtained. When the specific surface area of graphite (A) is equal to or greater than the above lower limit, the battery output can be improved due to an increase in the lithium ion storage capacity of the particles. When the specific surface area of graphite (A) is equal to or below the above upper limit, a decrease in battery capacity due to an increase in the irreversible capacity of the particles can be prevented.

In this specification, the specific surface area is a value measured by the BET method using nitrogen adsorption.

### • Interplanar spacing (d₀₀₂) of (002) plane and Lc

The interplanar spacing (d₀₀₂) of the (002) plane of graphite (A) measured by X-ray wide-angle diffraction is usually 0.335 nm or more and 0.337 nm or less. The Lc of graphite (A) measured by wide-angle X-ray diffraction is usually 90 nm or more, and preferably 95 nm or more. When the interplanar spacing (d₀₀₂) of the (002) plane is 0.337 nm or less, it indicates that the crystallinity of graphite (A) is high, and particles for a secondary battery negative electrode active material having high capacity can be obtained. When Lc is 90 nm or more, it indicates that graphite (A) has high crystallinity, and a negative electrode active material having high capacity can be obtained.

In this specification, the interplanar spacing of the (002) plane and Lc are values measured by X-ray wide-angle diffraction.

### • Length of major axis and minor axis

The length of the major axis of graphite (A) is usually 100 µm or less, preferably 90 µm or less, and more preferably 80 µm or less. The length of the minor axis of graphite (A) is usually 0.9 um or more, preferably 1.0 um or more, and more preferably 1.2 um or more. When the lengths of the major and minor axes of graphite (A) are within the above ranges, minute voids are likely to be formed in the resulting particles, and it is possible to alleviate volumetric expansion associated with charging and discharging and improves cycle characteristics.

### <Si-containing particles (B)>

### (Type of Si-containing particles (B))

The Si-containing particles (B) contain a silicon element (Si). Si in the Si-containing particles (B) may be a simple substance of Si or may be a Si compound.

The crystal state of the Si-containing particles (B) may be single crystal or polycrystal. The Si-containing particles (B) are preferably polycrystalline or amorphous because they can easily be made to have a small particle size and have high rate characteristics.

Examples of the Si compound include Si oxide, Si nitride, Si carbide, and the like.

Specific Si compounds include SiOx, SiNx, SiCx, SiZxOy (Z=C, N), and the like, preferably SiOx. The Si compound represented by the general formula SiOx is obtained using silicon dioxide (SiO₂) and metal Si (Si) as raw materials. The value of x is usually 0 or more and 2 or less, preferably 0.1 or more and 1.8 or less, more preferably 0.5 or more and 1.5 or less, and still more preferably 0.8 or more and 1.2 or less. When x is within the above range, it is possible to have high capacity and at the same time reduce irreversible capacity due to the bond between Li and oxygen.

In this specification, the value of x in SiOx is a calculated value of the ratio of the amount of oxygen to silicon. The amount of oxygen in SiOx is measured by an impulse furnace heating extraction-IR detection method under an inert gas atmosphere. The amount of silicon in SiOx is measured by ICP emission spectroscopy.

SiOx has a larger theoretical capacity than graphite (A). Amorphous Si or nano-sized Si crystals allow alkali ions such as lithium ions to enter and exit easily, making it possible to obtain high capacity.

The crystallite size is not particularly limited, and impurities may be present within the Si compound and on the surface of the compound.

### (Physical properties of Si-containing particles (B))

It is preferable that the Si-containing particles (B) exhibit the following physical properties.

### • Volume-average particle size (d₅₀)

The d₅₀ of the Si-containing particles (B) is usually 0.3 µm or more and 10 µm or less, preferably 0.35 µm or more and 3 µm or less, and more preferably 0.4 um or more and 1 µm or less. When the d₅₀ of the Si-containing particles (B) is within the above range, volumetric expansion accompanying charging and discharging is reduced, and good cycle characteristics can be obtained while maintaining charge and discharge capacity.

### • Maximum particle size (dₘₐₓ)

The dₘₐₓ of the Si-containing particles (B) is usually 0.02 um or more and 20 um or less, preferably 0.03 um or more and 5 µm or less, and more preferably 0.04 µm or more and 2 um or less. When the dₘₐₓ of the Si-containing particles (B) is equal to or greater than the above lower limit, the capacity tends to be high. When the dₘₐₓ of the Si-containing particles (B) is equal to or less than the above upper limit, the Si-containing particles (B) that are insufficiently composited with graphite (A) tend to be reduced.

The particle size of the Si-containing particles (B) is determined by heating the particles of the present invention in the presence of oxygen to burn and remove graphite (A), and then measuring the particle size distribution of the obtained particles according to the above measurement method.

### • Chromaticity a* and chromaticity b*

The chromaticity a* of the Si-containing particles (B) is usually 2 to 30, preferably 4 to 20, and more preferably 5 to 12. The chromaticity b* of the Si-containing particles (B) is usually 5 to 40, preferably 10 to 30, and more preferably 15 to 25. It is preferable that the chromaticity a* and the chromaticity b* of the Si-containing particles (B) are within the above ranges because volume changes during charge/discharge reactions can be suppressed.

The Si-containing particles (B) satisfying such chromaticity a* and chromaticity b* can be obtained by pulverizing Si-containing material such as a plate-like or granular material.

### • Specific surface area by BET method

The specific surface area of the Si-containing particles (B) determined by the BET method is usually 0.5 m²/g or more and 120 m²/g or less, and preferably 1 m²/g or more and 100 m²/g or less. It is preferable that the specific surface area of the Si-containing particles (B) by the BET method is within the above range because the battery has high charging/discharging efficiency and discharge capacity, lithium can be taken in and out quickly during high-speed charging and discharging, and the rate characteristics are excellent.

### • Oxygen content

The oxygen content of the Si-containing particles (B) is usually 0.01% by mass or more and 50% by mass or less, and preferably 0.05% by mass or more and 45% by mass or less based on 100% by mass of the Si-containing particles (B). The oxygen within the Si-containing particles (B) may be present near the surface, within the particles, or uniformly within the particles. It is preferable that oxygen in the Si-containing particles (B) exists near the surface. It is preferable that the oxygen content of the Si-containing particles (B) is within the above range because the strong bond between Si and O suppresses volumetric expansion due to charging and discharging, resulting in excellent cycle characteristics.

In the present specification, the oxygen content of the Si-containing particles (B) is a value obtained by measuring the amount of oxygen in the Si-containing particles (B) using an impulse furnace heating extraction-IR detection method under an inert gas atmosphere.

### • Crystallite size

The Si-containing particles (B) may have a crystal structure or may be amorphous. When the Si-containing particles (B) contain a crystal structure, the crystallite size of the (111) plane calculated by the X-ray diffraction method of the Si-containing particles (B) is usually 0.05 nm or more and 100 nm or less, and preferably 1 nm or more and 50 nm or less. It is preferable that the crystallite size of the Si-containing particles (B) is within the above range because the reaction between Si and Li ions proceeds quickly and the input/output is excellent.

In this specification, the crystallite size is a value determined by the Debye-Scherrer method from the diffraction peak attributed to the Si (111) plane centered around 2θ = 28.4° observed by X-ray wide-angle diffraction method.

### (Method for producing Si-containing particles (B))

Commercially available Si-containing particles may be used as the Si-containing particles (B). The Si-containing particles (B) may be produced by subjecting Si-containing particles having a large particle size to mechanical energy treatment using a ball mill or the like described below.

Further, Si-containing particles produced by the method described in Japanese Patent 3952118 B can also be used as the Si-containing particles (B), but the producing method is not limited thereto.

For example, when producing SiOx, Si dioxide powder and metal Si powder are mixed in a specific ratio, this mixture is filled into a reactor, the pressure maintained at normal pressure or specific reduced pressure, and the temperature is raised to 1000°C or higher. By holding it, SiO gas is generated, which is cooled and precipitated to obtain general formula SiOx particles (vapor deposition treatment). The precipitate can also be made into particles by applying mechanical energy treatment, and can used.

When performing mechanical energy treatment, equipment such as a ball mill, vibratory ball mill, planetary ball mill, rolling ball mill, bead mill, etc. is used. A reactor thereof is filled with a raw material and a moving body that does not react with the raw material is placed. Vibration, rotation, or a combination of these movements is then applied to the reactor to obtain the Si-containing particles (B) suitable for the present invention.

The mechanical energy treatment time is usually 3 minutes or more, preferably 5 minutes or more, more preferably 10 minutes or more, and even more preferably 15 minutes or more, and usually 5 hours or less, preferably 4 hours or less, more preferably 3 hours or less, and even more preferably 1 hour or less. When the mechanical energy treatment time is within the above range, both improved productivity and stability of product physical properties can be achieved.

The mechanical energy treatment temperature is preferably a temperature equal to or above the freezing point and equal to or below the boiling point of the solvent in view of the process.

The Si-containing particles (B) are usually obtained by pulverizing starting material using a dry pulverizer such as a ball mill, vibration mill, pulverizer, or jet mill to obtain as fine particles as possible referring to the size of the starting material, and then adjusting the particle size of the obtained particles by wet pulverizing using a bead mill. At the time of this wet pulverization, a carbon material such as carbon black, Ketjen black, or acetylene black may be mixed and pulverized, and the resulting powder can be used as Si-containing particles (B).

In the case of wet pulverization, it is preferable to select and use a dispersion solvent that has no or very little reactivity with the Si-containing particles (B). If necessary, a small amount of dispersant (surfactant) may be added to wet with the dispersion solvent. It is also preferable to select a dispersant that has no or very little reactivity with the Si-containing particles (B).

### • Type of dispersion solvent

The type of dispersion solvent is not particularly limited, but examples include nonpolar compounds having an aromatic ring and polar solvents. Although there is no particular restriction on the type of nonpolar compound having an aromatic ring, it is preferable to use one that does not have reactivity with the raw material of the Si-containing particles (B). Examples thereof include aromatic compounds that are liquid at room temperature such as benzene, toluene, xylene, cumene, and methylnaphthalene; alicyclic hydrocarbons such as cyclohexane, methylcyclohexane, methylcyclohexene, and bicyclohexyl; petrochemicals such as light oil and heavy oil; and residual oil from coal chemistry. Among these, xylene, methylnaphthalene, and heavy oil are preferred, methylnaphthalene and heavy oil are more preferred, and heavy oil is even more preferred because of its high boiling point. In wet pulverization, increasing the pulverization efficiency increases the likelihood of heat generation. Solvents having low boiling points may volatilize and become highly concentrated.

The polar solvent is preferably a solvent in which not only water but also an organic solvent dissolves. Examples of the polar solvent include NMP (N-methyl-2-pyrrolidone), GBL (γ-butyrolactone), DMF (N,N-dimethylformamide), methanol, ethanol, 1-propanol, 2-propanol, and the like. Among them, NMP (N-methyl-2-pyrrolidone) is preferred because it is difficult to decompose and has a high boiling point, and 2-propanol is preferred because it is low in cost.

The mixing ratio of the dispersion solvent is usually 10% by mass or more and 50% by mass or less, preferably 20% by mass or more and 40% by mass or less, based on the total 100% by mass of the Si-containing particles (B) and the dispersion solvent. When the mixing ratio of the dispersion solvent is at least the above lower limit, the Si-containing particles (B) tend to be uniformly dispersed. When the mixing ratio of the dispersion solvent is equal to or below the above upper limit, there is a tendency for cost reduction.

### • Type of dispersant

A dispersant may be used in producing the Si-containing particles (B).

Examples of the dispersant include high molecular weight polyester acid amide amines, polyether ester acid amine salts, polyethylene glycol phosphate esters, primary to tertiary amines, quaternary amine salts, and the like. Among these, a high molecular weight polyester acid amide amine type is preferable since it is easy to obtain a dispersion effect due to steric hindrance.

### <Content of graphite (A) and Si-containing particles (B)>

The below-described content of graphite (A) and Si-containing particles (B) in the particles of the present invention is based on the total of 100% by mass of graphite (A), Si-containing particles (B), and the optional carbonaceous material described below. It is preferable that the content of graphite (A) is 10 to 95% by mass, and the content of Si-containing particles (B) is 3 to 60% by mass. It is more preferable that the content of graphite (A) is 30 to 90% by mass, and the content of Si-containing particles (B) is 5 to 50% by mass. It is more preferable that the content of graphite (A) is 50 to 85% by mass, and the content of Si-containing particles (B) is 8 to 40% by mass. When the content of graphite (A) is at least the above lower limit and the content of Si-containing particles (B) is at most the above upper limit, it is easy to proceed with the composite of graphite (A) and Si-containing particles (B). When the content of graphite (A) is equal to or below the above upper limit and the content of Si-containing particles (B) is equal to or above the above lower limit, the particles of the present invention can have a high capacity.

### <Carbonaceous materials>

The particles of the present invention may contain carbonaceous materials other than the graphite (A). When the particles of the present invention contain a carbonaceous material other than the graphite (A), it is possible to reduce the influence of size and shape of graphite (A) and Si-containing particles (B) when proceeding with composite of graphite (A) and Si-containing particles (B), which is preferable. In this case, amorphous carbon is preferable as the carbonaceous material, because it has excellent acceptability for lithium ions.

Specifically, the carbonaceous material can be obtained by heat-treating a carbon precursor as described below. As the carbon precursor, carbon materials described in (i) and/or (ii) below are preferable.
(i) Carbonizable organic material selected from the group consisting of coal-based heavy oil, direct-desulfurized heavy oil, cracked petroleum heavy oil, aromatic hydrocarbons, N-ring compounds, S-ring compounds, polyphenylene, organic synthetic polymers, natural polymers, thermoplastic resins, and thermosetting resins
(ii) A carbonizable organic substance dissolved in a low-molecular organic solvent

When the particles of the present invention contain a carbonaceous material, the content of the carbonaceous substance is preferably 2 to 30% by mass, more preferably 5 to 25% by mass, and still more preferably 7 to 20% by mass, based on the total of 100% by mass of graphite (A), Si-containing particles (B), and carbonaceous material. When the content of the carbonaceous material is at least the above lower limit, the specific surface area of the particles of the present invention is reduced and the initial charge/discharge efficiency is improved. When the content of carbonaceous material is equal to or below the above upper limit, the particles of the present invention can have a high capacity.

### <Chromaticity b*,Chromaticity a*>

### (Chromaticity b*)

The particles of the present invention are characterized in that the chromaticity b* is 2.0 or less. When the chromaticity b* of the particles of the present invention is 2.0 or less, the particles can exhibit excellent battery characteristics as a negative electrode active material of a secondary battery as described above. From this viewpoint, the chromaticity b* of the particles of the present invention is preferably 1.1 or less, and more preferably 1.0 or less. When the chromaticity b* is too low, the Si-containing particles (B) may not contribute to the charge/discharge reaction. Therefore, the chromaticity b* of the particles of the present invention is preferably 0.2 or more, and more preferably 0.4 or more.

### (Chromaticity a*)

The chromaticity a* of the particles of the present invention is preferably 1.2 or less, more preferably 1.0 or less, and still more preferably 0.8 or less. The chromaticity a* of the particles of the present invention is preferably 0.2 or more, more preferably 0.3 or more, and still more preferably 0.4 or more. When the chromaticity a* is equal to or below the above upper limit, contact between graphite (A) and Si-containing particles (B) is likely to be maintained. When the chromaticity a* is equal to or higher than the above lower limit, the charge/discharge reaction of the Si-containing particles (B) is less likely to be inhibited.

In order to produce the particles whose chromaticity a* and chromaticity b* are within the above-mentioned preferred ranges, the following method may be employed.
- Graphite (A) and Si-containing particles (B) are mixed uniformly in an appropriate ratio, and after fixing the Si-containing particles (B) on graphite (A), mechanical energy is applied to form a composite.
- After performing the above composite treatment, it is mixed with an appropriate amount of carbonaceous raw material and coated with carbonaceous material by performing heat treatment.
- Si-containing particles (B) having a very small particle size ratio with respect to graphite (A) are uniformly mixed in an appropriate ratio, and mechanical energy is applied to form a composite.

### <Other physical properties of the particles of the present invention>

The preferred physical properties of the particles of the present invention are as follows.

### • Spacing between (002) planes of particles (d₀₀₂)

The interplanar spacing (d₀₀₂) of the (002) plane of the graphite (A) contained in the particles of the present invention as determined by wide-angle X-ray diffraction is usually 0.335 nm or more and 0.337 nm or less. The Lc of the particles of the present invention measured by wide-angle X-ray diffraction is usually 90 nm or more, and preferably 95 nm or more. When the interplanar spacing (d₀₀₂) and Lc of the (002) plane determined by X-ray wide-angle diffraction are within the above ranges, the particles for a secondary battery negative electrode active material become a high capacity electrode.

### • Particle tap density

The tap density of the particles of the present invention is usually 0.5 g/cm ³ or more, preferably 0.6 g/cm ³ or more, and more preferably 0.8 g/cm ³ or more.

When the tap density of the particles of the present invention is equal to or higher than the above lower limit, the particles have a spherical shape, a sufficient continuous gap is secured in the electrode, and the mobility of Li ions in the electrolytic solution held in the gap is improved. This tends to improve rapid charging and discharging characteristics.

### • Raman R value of particles

The Raman R value of the particles of the present invention is usually 0.05 or more and 0.4 or less, and preferably 0.1 or more and 0.35 or less. When the Raman R value of the particles of the present invention is within the above range, the crystallinity of the surface of the particles is uniform and high capacity can be expected.

In this specification, Raman R value is defined as the intensity ratio (IB/IA) calculated by measuring the intensity IA of the peak PA that occurs around 1580 cm⁻¹ and the intensity IB of the peak PB that occurs around 1360 cm⁻¹ in a Raman spectrum obtained by Raman spectroscopy. Note that the expression "around 1580 cm⁻¹" refers to a range of 1580 to 1620 cm⁻¹, and the expression "around 1360 cm⁻¹" refers to a range of 1350 to 1370 cm⁻¹.

A Raman spectrum can be measured with a Raman spectrometer. Specifically, the particles that are to be measured are dropped into a measurement cell by gravity in order to charge the sample into the cell. The measurement is conducted while the inside of the measurement cell is irradiated with an argon ion laser beam and the measurement cell is rotated in a plane perpendicular to the laser beam.

### • Specific surface area of particles by BET method

The specific surface area of the particles of the present invention determined by the BET method is usually 0.1 m²/g or more and 40 m²/g or less, preferably 0.7 m²/g or more and 35 m²/g or less, and more preferably 1 m²/g or more and 30 m²/g or less. When the specific surface area of the particles of the present invention measured by the BET method is equal to or larger than the above lower limit, the acceptability of lithium ions tends to improve during charging when used as an active material for a negative electrode. When the specific surface area of the particles of the present invention measured by the BET method is equal to or less than the above upper limit, when used as an active material for a negative electrode, the contact portion between the particles and the nonaqueous electrolyte can be suppressed, and reactivity is reduced. Thereby, gas generation tends to be easily suppressed, and a preferable battery tends to be easily obtained.

### • Volume-average particle size of particles (d₅₀)

The d₅₀ of the particles of the present invention is usually 1 um or more and 50 µm or less, preferably 4 µm or more and 40 µm or less, and more preferably 6 um or more and 30 µm or less.

When the d₅₀ of the particles of the present invention is equal to or greater than the above lower limit, it is possible to produce particles having a particle size within a range that allows an electrode to be constructed with an appropriate amount of binder. When the d₅₀ of the particles of the present invention is equal to or below the above upper limit, it is possible to suppress the occurrence of streaks and unevenness caused by particles during the process of applying the particles as a slurry by adding a binder, water, or an organic solvent in the production of secondary batteries.

### [Method for producing particles of the present invention]

The particles of the present invention can be produced according to the method for producing particles of the present invention, preferably by mixing graphite (A) and Si-containing particles (B) and then subjecting them to a spheronization treatment to form a composite. When mixing the graphite (A) and the Si-containing particles (B) here, the above-mentioned carbonaceous material may be further mixed.

The mixing ratio of the graphite (A), the Si-containing particles (B), and the carbonaceous material used as necessary may be set according to the above-mentioned content ratio.

The method for producing particles of the present invention may be any method capable of producing particles containing graphite (A) and Si-containing particles (B) and having a chromaticity b* of 2.0 or less.

A preferred method for producing particles of the present invention includes at least the following steps 1 and 2.
Step 1: Step of obtaining a mixture containing at least graphite (A) and Si-containing particles (B)
Step 2: Step of applying mechanical energy to the mixture of Step 1 and subjecting it to spheroidization treatment.

Hereinafter, the producing method of the present invention will be explained in detail.

### (Step 1: Step of obtaining a mixture containing at least graphite (A) and Si-containing particles (B))

The mixture obtained in this step may be in the form of powder, solidification, lumps, slurry, etc., but from the viewpoint of ease of handling, it is preferably in the form of lumps.

In this step, there is no particular restriction on the method of mixing graphite (A) and Si-containing particles (B) as long as a mixture containing at least graphite (A) and Si-containing particles (B) is obtained. As for the mixing method, the graphite (A) and the Si-containing particles (B) may be mixed by adding them all at once, or they may be mixed by adding each of them one after another.

A preferred method for obtaining the mixture includes a method of using wet Si-containing particles (B) and mixing them with graphite (A) without drying the Si-containing particles (B).

As the wet Si-containing particles (B), the Si-containing particles (B) obtained by producing the above-mentioned Si-containing particles (B) by a wet method may be used. The wet Si-containing particles (B) may be prepared by producing Si-containing particles (B) by a dry process, and then wetting them either by dispersing them in a dispersion solvent before being mixed with graphite (A) or by mixing them with a polymer containing a nitrogen atom dissolved in a solvent.

Since the Si-containing particles (B) wetted in this way suppress the aggregation of the Si-containing particles (B), they can be uniformly dispersed during mixing, and the Si-containing particles (B) can be fixed easily on the surface of the graphite (A), which is preferable.

In order to make it easier to uniformly disperse the Si-containing particles (B) on the surface of the graphite (A), the dispersion solvent used when wet-pulverizing the Si-containing particles (B) may be added in excess during mixing.

In this specification, when mixing the Si-containing particles (B) as a slurry with graphite (A), the solid content of the Si-containing particles (B) is usually 10% by mass or more and 90% by mass or less, preferably 15% by mass or more and 85% by mass or less, and more preferably 20% by mass or more and 80% by mass or less based on 100% by mass of the slurry. When the solid content of the Si-containing particles (B) is equal to or below the above lower limit, it tends to be easier to handle in the process. When the solid content of the Si-containing particles (B) is less than the above upper limit, the fluidity of the slurry is excellent and the Si-containing particles (B) tend to be easily dispersed in the graphite (A).

After mixing, it is preferable to evaporate and dry the dispersion solvent using an evaporator, dryer, etc. to immobilize the Si-containing particles (B) on the graphite (A).

Alternatively, it is preferable to immobilize the Si-containing particles (B) on the graphite (A) by heating in a high-speed stirrer and mixing while evaporating the dispersion solvent without adding an excess of the dispersion solvent.

At this time, a carbon precursor, etc., which will be described later, may be mixed, since the reactivity between the Si-containing particles (B) and the electrolytic solution can be suppressed.

Furthermore, at this time, a resin or the like may be mixed as a void forming material in order to alleviate the destruction of the Si-containing particles (B) due to expansion and contraction.

Examples of resins that can be used as the void forming material in Step 1 include polyvinyl alcohol, polyethylene glycol, polycarbosilane, polyacrylic acid, cellulose polymers, and the like. Polyvinyl alcohol and polyethylene glycol are preferred because they have a small amount of residual carbon during heating and a relatively low decomposition temperature.

Mixing is usually carried out under normal pressure, but it can also be carried out under reduced pressure or increased pressure. Mixing can be carried out either batchwise or continuously. In either case, the mixing efficiency can be improved by using a combination of devices suitable for coarse mixing and devices suitable for precise mixing. Further, an apparatus that performs mixing and immobilization (drying) at the same time may be used.

Drying is usually performed under reduced pressure or increased pressure. Drying under reduced pressure is preferred.

The drying time is usually 5 minutes or more and 2 hours or less, preferably 10 minutes or more and 1 and a half hours or less, and more preferably 20 minutes or more and 1 hour or less.

Although the drying temperature varies depending on the solvent, it is preferably a temperature that can achieve the above-mentioned time. Further, it is preferable that the temperature is equal to or below the temperature at which the resin is not denatured.

Examples of a batch type mixing device include a mixer with a structure in which two frame molds rotate and revolve; a device with a structure in which a single blade performs stirring and dispersion in a tank, such as a dissolver that is a high-speed, high-shear mixer or a butterfly mixer for high viscosity; a so-called kneader type device that has a structure in which a stirring blade such as a sigma type rotates along the side of a semi-cylindrical mixing tank; trimix type device with three axes of stirring blades; a so-called bead mill type device that has a rotating disk and a dispersion medium in a container; etc.

Examples of a batch type mixing device further include the following devices, which are: a device having a container provided with a paddle rotated by a shaft wherein the inner wall surface of the container is formed substantially along the outermost line of rotation of the paddle, preferably formed in a long double-barrel shape, and the paddles slide on opposite sides, and wherein the device has a structure in which many pairs are arranged in the axial direction of the shaft so as to be movably interlocked (for example, KRC reactor manufactured by Kurimoto Iron Works, SC processor, TEM manufactured by Toshiba Machine Cermak, TEX-K manufactured by Japan Steel Works, etc.); a (external heating type) device having a container wherein a single internal shaft and a plurality of plow-shaped or serrated paddles fixed to the shaft are arranged in different phases, and wherein the inner wall surface of the container is substantially along the outermost line of rotation of the paddle, preferably, has a cylindrical structure (for example, a Loedige mixer manufactured by Loedige Co., Ltd., a flow shear mixer manufactured by Pacific Kiko Co., Ltd., a DT dryer manufactured by Tsukishima Kikai Co., Ltd., etc.).

To perform mixing in a continuous manner, a pipeline mixer, continuous bead mill, etc. may be used. It is also possible to homogenize by means such as ultrasonic dispersion.

The mixture obtained in this step may be subjected to powder processing such as pulverization, crushing, and classification as appropriate.

There are no particular restrictions on the equipment used for pulverizing or crushing. Examples of the coarse crusher include shear mills, jaw crushers, impact crushers, cone crushers, and the like. Examples of intermediate crushers include roll crushers, hammer mills, and the like. Examples of the pulverizer include a ball mill, a vibration mill, a pin mill, a stirring mill, and a jet mill.

In the case of dry sieving for classification, a rotary sieve, a oscillating sieve, a rotating sieve, a vibrating sieve, etc. can be used as the device. In the case of dry airflow classification, a gravity classifier, an inertial force classifier, or a centrifugal force classifier (classifier, cyclone, etc.) can be used. Wet sieving, mechanical wet classifier, hydraulic classifier, sedimentation classifier, centrifugal wet classifier, etc. can be used.

### (Step 2: Step of applying mechanical energy to the mixture of Step 1 and subjecting it to spheroidization treatment)

By conducting this step 2, the degree of compositing of graphite (A) and Si-containing particles (B) is greatly improved, and particles of the present invention can be produced.

The producing method for obtaining the particles of the present invention is to subject a mixture in which Si-containing particles (B) are mixed on the surface of the graphite (A) obtained in step 1 above (herein also referred to as a mixture). In particular, in the present invention, it is preferable that producing conditions as described below are appropriately set so that Si-containing particles (B) within a predetermined range are present in the gaps within the structure of graphite (A).

The spheroidization process is basically a process that uses mechanical energy (mechanical effects such as impact compression, friction, and shear force). Specifically, treatment using a hybridization system is preferred. The system has a rotor with multiple blades that applies mechanical effects such as impact compression, friction, and shear forces, and the rotation of the rotor generates a large air flow. As a result, a large centrifugal force is applied to the graphite (A) in the mixture obtained in step 1 above, so that the graphite (A) interacts with each other, and collides with the wall or blade, whereby the composite of graphite (A) and Si-containing particles (B) in the mixture obtained in step 1 proceeds efficiently, and the chromaticity b* can be lowered to a desired range.

As example of the device used for the spheroidization process includes a rotor provided with a number of blades disposed inside a casing and performs a surface treatment by rotating the rotor at a high speed and thereby applying a mechanical action, such as an impact, compressive, frictional, or shear force, to the carbon material introduced into the inside thereof.

Specific examples of such an apparatus include "Hybridization System" (produced by Nara Machinery Co., Ltd.), "KRYPTRON", "KRYPTRON Orb" (produced by Earth Technica Co., Ltd.), "CF Mill" (produced by Ube Industries, Ltd.), "MECHANO FUSION System", "NOBILTA", "FACULTY" (produced by Hosokawa Micron Corporation), "Theta Composer" (produced by TOKUJU Co., LTD.), and "COMPOSI" (produced by NIPPON COKE & ENGINEERING CO., Ltd.). Among these, "Hybridization System" produced by Nara Machinery Co., Ltd. is preferable.

When performing the treatment using the above-mentioned apparatus, the peripheral speed of the rotating rotor is usually 30 to 100 m/sec, preferably 40 to 100 m/sec, and more preferably 50 to 100 m/sec.

The treatment can be carried out by simply passing the carbon material through the apparatus. But it is preferable to process the carbon material by circulating or staying in the apparatus for 30 seconds or more, and it is more preferable to process the carbon material by circulating or staying in the apparatus for 1 minute or more.

### • Granulating agent

The spheronization treatment may be performed in the presence of a granulating agent. By using a granulating agent, the adhesion force between the carbon materials increases, and it becomes possible to produce a spherical carbon material to which the carbon materials are more firmly adhered.

The granulating agent used in this embodiment preferably does not contain an organic solvent. When the granulating agent contains an organic solvent, it is preferable that at least one of the organic solvents does not have a flash point. When the granulating agent has a flash point, it is preferable that the flash point is 5°C or higher. As a result, when granulating carbon materials in the next process, it is possible to prevent the risk of ignition, fire, and explosion of organic compounds induced by impact and heat generation, and to ensure stable and efficient production.

Examples of granulating agents include coal tar, petroleum heavy oil, paraffinic oils such as liquid paraffin, synthetic oils such as olefinic oils, naphthenic oils, and aromatic oils; natural oils such as vegetable oils and fats, animal fats, esters, and higher alcohols; organic compounds such as resin binder solutions in which a resin binder is dissolved in an organic solvent having a flash point of 5°C or higher, preferably 21°C or higher; aqueous solvents such as water; and mixtures thereof, and the like.

Examples of organic solvents having a flash point of 5°C or higher include aromatic hydrocarbons such as alkylbenzenes such as xylene, isopropylbenzene, ethylbenzene, propylbenzene, and the like, alkylnaphthalenes such as methylnaphthalene, ethylnaphthalene, propylnaphthalene, and the like, allylbenzenes such as styrene, and the like and allylnaphthalene, and the like; aliphatic hydrocarbons such as octane, nonane, decane, and the like; ketones such as methylisobutyl ketone, diisobutyl ketone, cyclohexanone, and the like; esters such as propyl acetate, butyl acetate, isobutyl acetate, amyl acetate, and the like; alcohols such as methanol, ethanol, propanol , butanol, isopropyl alcohol, isobutyl alcohol, ethylene glycol, propylene glycol, diethylene glycol, triethylene glycol, tetraethylene glycol, glycerin, and the like; glycol derivatives such as ethylene glycol monomethyl ether, ethylene glycol monoethyl ether, ethylene glycol monobutyl ether, diethylene glycol monobutyl ether , triethylene glycol monobutyl ether, tetraethylene glycol monobutyl ether, methoxypropanol, methoxypropyl-2-acetate, methoxymethylbutanol, methoxybutyl acetate, diethylene glycol dimethyl ether, dipropylene glycol dimethyl ether, diethylene glycol ethyl methyl ether, triethylene glycol dimethyl ether, tripropylene glycol dimethyl ether, tetraethylene glycol dimethyl ether, ethylene glycol monophenyl ether, and the like; ethers such as 1,4-dioxane, and the like; nitrogen-containing compounds such as dimethylformamide, pyridine, 2-pyrrolidone, N-methyl-2-pyrrolidone, and the like; sulfur-containing compounds such as dimethyl sulfoxide, and the like; halogen-containing compounds such as dichloromethane, chloroform, carbon tetrachloride, dichloroethane, trichloroethane, chlorobenzene, and the like; mixtures thereof; and the like. For example, substances having a low flash point such as toluene are not included. These organic solvents can also be used alone as a granulating agent.

In this specification, the flash point can be measured by a known method.

Examples of the resin binder include cellulose resin binders such as ethyl cellulose, methyl cellulose, salts thereof, and the like; acrylic resin binders such as polymethyl acrylate, polyethyl acrylate, polybutyl acrylate, polyacrylic acid, salts thereof, and the like; methacrylic resin binders such as polymethyl methacrylate, polyethyl methacrylate, polybutyl methacrylate, and the like; phenolic resin binders, and the like.

Among the granulating agents, coal tar, heavy petroleum oil, paraffinic oils such as liquid paraffin, alcohols, and aromatic oils are preferred because they can produce spherical carbon materials having high circularity and less fine powder.

The granulating agent is preferably one that can be efficiently removed and does not adversely affect battery characteristics such as capacity, output characteristics, storage and cycle characteristics. Specifically, a material of which mass decreases by usually 50% or more, preferably 80% or more, more preferably 95% or more, even more preferably 99% or more, and particularly preferably 99.9% or more when heated to 700°C in an inert atmosphere can be appropriately selected.

The graphite (A) in the mixture obtained in step 1, which is subjected to spheronization treatment, may have already been subjected to a certain spheronization treatment under conventional conditions. Further, the mechanical action may be repeatedly applied to the composite obtained in Step 1 by circulating it or passing through this step multiple times.

During the spheronizing treatment, the rotation speed of the rotor is usually 2000 rpm or more and 9000 rpm or less, preferably 4000 rpm or more and 8000 rpm or less, more preferably 5000 rpm or more and 7500 rpm or less, and still more preferably 6000 rpm or more and 7200 rpm or less. The spheronizing treatment time is usually 30 seconds or more and 60 minutes or less, preferably 1 minute or more and 30 minutes or less, more preferably 1 minute 30 seconds or more and 10 minutes or less, and still more preferably 2 minutes or more and 5 minutes or less.

When the rotation speed of the rotor is too low, the spherical process will be weak and the tapping density may not increase sufficiently. When the rotation speed of the rotor is too high, the pulverization effect will be stronger than the spherical processing, and the particles may collapse and the tapping density may decrease. When the spheronizing treatment time is too short, it will not be possible to sufficiently reduce the particle size and achieve a high tapping density. When the spheroidization treatment time is too long, the graphite (A) in the mixture obtained in step 1 will be broken into powder, and the object of the present invention may not be achieved.

The obtained particles may be subjected to classification treatment. If the obtained particles are not within the physical property range specified in the present invention, they can be brought into the desired physical property range by repeated classification treatment (usually 2 to 10 times, preferably 2 to 5 times). Examples of classification include dry classification (air classification, sieve), wet classification, and the like. Dry classification, especially mechanical classification, is preferred from the viewpoint of cost and productivity.

The particles of the present invention can be produced by the production method described above.

### <Method for producing carbonaceous material-coated particles>

The particles of the present invention obtained as described above preferably contain a carbonaceous material. As a more specific embodiment, it is more preferable to coat at least a portion of the surface of the particles with a carbonaceous material (hereinafter also referred to as "carbonaceous material-coated particles" or "carbonaceous material-coated particles of the present invention").

The carbonaceous material-coated particles can be produced by performing the following step 3 after the above-mentioned step 2.

### Step 3: Step of coating the particles spheroidized in Step 2 with a carbonaceous material

Hereinafter, Step 3 will be explained in detail.

### (Step 3: Step of coating the particles spheroidized in Step 2 with carbonaceous material)

### • Carbonaceous substances

Examples of the carbonaceous material include amorphous carbon and graphitized material, depending on the heating temperature in the producing method described below. Among these, amorphous carbon is preferred from the viewpoint of acceptance of lithium ions.

Specifically, the carbonaceous material can be obtained by subjecting its carbon precursor to a heat treatment described below. The carbon material described in (i) and/or (ii) above is preferable as the carbon precursor.

### • Coating treatment

In the coating treatment, a carbon precursor for obtaining a carbonaceous material is used as a coating raw material for the particles obtained in step 2 described above, and these are mixed and heated to obtain coated particles.

By setting the heating temperature to usually 600°C or higher, preferably 700°C or higher, and more preferably 900°C or higher, and usually 2000°C or lower, preferably 1500°C or lower, and more preferably 1200°C or lower, the amorphous carbon can be obtained as the carbonaceous material. When heat treatment is performed at a heating temperature of usually 2000°C or higher, and preferably 2500°C or higher, and usually 3200°C or lower, graphitized carbon is obtained as a carbonaceous material.

The amorphous carbon is carbon having low crystallinity. The graphitized carbon is highly crystalline carbon.

In the coating treatment, the above-mentioned particles are used as a core material, a carbon precursor for obtaining a carbonaceous material is used as a coating raw material, and these are mixed and heated to obtain carbonaceous material-coated particles.

### • Mixing with metal particles or carbon particles

The coating layer may contain alloyable metal particles or carbon fine particles. The shape of the carbon fine particles is not particularly limited, and may be granular, spherical, chain-like, needle-like, fibrous, plate-like, scale-like, or the like.

The carbon fine particles are not particularly limited, but specific examples thereof include fine coal powder, gas phase carbon powder, carbon black, Ketjen black, carbon nanofibers, and the like. Among these, carbon black is particularly preferred. Carbon black has the advantage of having high input/output characteristics even at low temperatures and being inexpensive and easily available.

The volume-average particle size (d₅₀) of the carbon fine particles is usually 0.01 µm or more and 10 µm or less, preferably 0.05 µm or more and 8 um or less, more preferably 0.07 µm or more and 5 µm or less, and even more preferably 0.1 µm or more and 1 µm or less.

When the carbon fine particles have a secondary structure in which primary particles aggregate and agglomerate, other physical properties and types are not particularly limited as long as the primary particle size is 3 nm or more and 500 nm or less. The primary particle size is preferably 3 nm or more and 500 nm or less, more preferably 15 nm or more and 200 nm or less, still more preferably 30 nm or more and 100 nm or less, and particularly preferably 40 nm or more and 70 nm or less.

### • Other processes

The particles that have undergone the above steps may be subjected to powder processing such as pulverization, crushing, and classification treatment described in Step 1.

The carbonaceous material-coated particles of the present invention can be produced by the production method described above.

### <Application>

By using the particles of the present invention as a negative electrode active material of a secondary battery, it is possible to realize a secondary battery having excellent battery characteristics. Therefore, the particles of the present invention are useful as negative electrode active materials for secondary batteries.

### [Secondary battery]

The secondary battery of the present invention is a secondary battery including a positive electrode, a negative electrode, and an electrolyte, wherein the negative electrode includes a current collector and a negative electrode active material layer disposed on the current collector, and the negative electrode active material layer contains the particles of the present invention. The secondary battery of the present invention is usually manufactured by the method for manufacturing a secondary battery of the present invention, which includes a step of forming a negative electrode active material layer containing the particles of the present invention on a current collector to obtain a negative electrode.

### <Negative electrode>

To produce a negative electrode (hereinafter sometimes referred to as "the negative electrode of the present invention") using the particles of the present invention, the particles of the present invention mixed with a binder (binder resin) are dispersed in a dispersion medium. This is applied to a current collector and dried to form a negative electrode active material layer on the current collector.

As the binder, one having an olefinic unsaturated bond in the molecule is used. The type is not particularly limited. Specific examples include styrene-butadiene rubber, styreneisoprene-styrene rubber, acrylonitrile-butadiene rubber, butadiene rubber, and ethylene-propylene-diene copolymer. By using a binder having such an olefinic unsaturated bond, the swelling property of the negative electrode active material layer to the electrolytic solution can be reduced. Among them, styrene-butadiene rubber is preferred because of its easy availability.

As a binder having an olefinic unsaturated bond in its molecules, it is desirable to have a large molecular weight or a high proportion of unsaturated bonds.

As a binder having a large molecular weight, it is desirable that the weight average molecular weight is usually in the range of 10,000 or more, preferably 50,000 or more, and usually 1,000,000 or less, preferably 300,000 or less. As a binder having a high proportion of unsaturated bonds, it is desirable that the number of moles of olefinic unsaturated bonds per 1 gram of the total binder is usually 2.5 × 10⁻⁷ or more, preferably 8 × 10⁻⁷ or more, and usually 5×10⁻⁶ or less, and preferably 1×10⁻⁶ or less.

The binder only needs to satisfy at least one of these molecular weight regulations and unsaturated bond ratio regulations, but it is more preferable to use a binder that satisfies both regulations at the same time. When the molecular weight of the binder having an olefinic unsaturated bond is too small, mechanical strength will be poor. When the molecular weight of the binder is too large, flexibility will be poor. Furthermore, when the proportion of olefinic unsaturated bonds in the binder is too low, the strength-improving effect will be diminished, and when it is too high, flexibility will be poor.

The degree of unsaturation of the binder having an olefinic unsaturated bond is desirable usually in the range of 15% or more, preferably 20% or more, and more preferably 40% or more, and usually 90% or less, and preferably 80% or less. The degree of unsaturation refers to the ratio (%) of double bonds to repeating units of a polymer.

In the present invention, a binder having no olefinic unsaturated bonds can also be used in combination with the above-mentioned binder having an olefinic unsaturated bond as long as the effects of the present invention are not lost. The mixing ratio of the binder having no olefinic unsaturated bonds to the amount of the binder having an olefinic unsaturated bond is usually 150% by mass or less, and preferably 120% by mass or less.

Coating properties can be improved by using a binder having no olefinic unsaturated bonds, but when the amount used is too large, the strength of the active material layer will decrease.

Examples of binder having no olefinic unsaturated bonds include polysaccharides such as methylcellulose, carboxymethylcellulose, and starch; thickening polysaccharides such as carrageenan, pullulan, guar gum, and xanthan gum; polyethers such as polyethylene oxide, polypropylene oxide, vinyl alcohols such as polyvinyl alcohol and polyvinyl butyral; polyacids such as polyacrylic acid and polymethacrylic acid, or metal salts of these polymers; fluorine-containing polymers such as polyvinylidene fluoride; alkane polymers such as polyethylene, polypropylene and copolymers thereof.

The mass ratio (the particles of the present invention / the binder) of the particles of the present invention in the slurry to the binder (which may be a mixture of a binder having an unsaturated bond and a binder having no unsaturated bonds as described above) is usually 90/10 or more, preferably 95/5 or more, and usually 99.9/0.1 or less, preferably 99.5/0.5 in terms of dry mass ratio.

When the ratio of binder is too high, it tends to cause a decrease in capacity and an increase in resistance. When the ratio of the binder is too small, the strength of the negative electrode plate will be poor.

An organic solvent such as alcohol or water can be used as a dispersion medium to form a slurry in which the particles of the present invention and a binder are dispersed.

A conductive agent may be further added to this slurry if desired. Examples of the conductive agent include carbon black such as acetylene black, Ketjen black, and furnace black, and fine powder of Cu, Ni, or an alloy thereof having an average particle size of 1 µm or less. The amount of the conductive agent added is usually 10% by mass or less based on the particles of the present invention.

A conventionally known current collector can be used to apply the slurry. Specifically, metal thin films such as rolled copper foil, electrolytic copper foil, and stainless steel foil can be mentioned. The thickness of the current collector is usually 4 µm or more, preferably 6 µm or more, and usually 30 µm or less, preferably 20 µm or less.

The above slurry is applied onto a current collector using a doctor blade or the like, dried, and then pressed using a roll press or the like to form a negative electrode active material layer. At this time, the slurry is preferably applied so that the amount of particles of the present invention deposited on the current collector is 5 to 15 mg/cm².

Drying after applying the slurry onto the current collector is carried out at a temperature of usually 60°C or higher, preferably 80°C or higher, and usually 200°C or lower, preferably 195°C or lower, in dry air or an inert atmosphere.

The thickness of the negative electrode active material layer obtained by coating and drying the slurry is usually 5 um or more, preferably 20 um or more, more preferably 30 µm or more, and usually 200 um or less, preferably 100 µm or less, more preferably 75 um or less in the state after pressing. When the negative electrode active material layer is too thin, it lacks practicality as a negative electrode active material layer due to a balance with the particle size of the particles of the present invention, which are negative electrode active materials. When the negative electrode active material layer is too thick, it is difficult to obtain a sufficient function of intercalating and deintercalating Li ions for high-density current values.

The density of the particles of the present invention in the negative electrode active material layer varies depending on the application, but in applications where capacity is important, it is preferably 1.55 g/cm³ or more, particularly 1.6 g/cm³ or more, more preferably 1.65 g/cm³ or more, and particularly preferably 1.7 g/cm³ or more. When the density is too low, the capacity of the battery per unit volume is not necessarily sufficient. When the density is too high, the rate characteristics will deteriorate, so the density of graphite is preferably 1.9 g/cm³ or less.

When producing the negative electrode of the present invention using the particles of the present invention described above, there are no particular restrictions on the method or selection of other materials.

Even in the case of manufacturing a secondary battery using this negative electrode, there are no particular restrictions on the selection of the components necessary for battery construction, such as the positive electrode and electrolyte that constitute the secondary battery.

### <Secondary battery>

Hereinafter, details of the secondary battery of the present invention including a negative electrode using the particles of the present invention will be explained using a lithium-ion secondary battery as an example. The materials, manufacturing methods, etc. that can be used for the secondary battery of the present invention are not limited to the following specific examples.

The basic configuration of the secondary battery of the present invention, particularly the lithium-ion secondary battery, is the same as that of a conventionally known lithium-ion secondary battery, and usually includes a positive electrode and a negative electrode capable of intercalating and deintercalating lithium ions, and an electrolyte. As the negative electrode, the negative electrode of the present invention described above is used.

The positive electrode is one in which a positive electrode active material layer containing a positive electrode active material and a binder is formed on a current collector.

Examples of the positive electrode active material include metal chalcogen compounds that can occlude and release alkali metal cations such as lithium ions during charging and discharging. Examples of metal chalcogen compounds include transition metal oxides such as vanadium oxide, molybdenum oxide, manganese oxide, chromium oxide, titanium oxide, tungsten oxide, transition metal sulfides such as vanadium sulfide, molybdenum sulfide, titanium sulfide and CuS; phosphorus-sulfur compounds of transition metals such as NiPS₃ and FePS₃; selenium compounds of transition metals such as VSe₂ and NbSe₃; composite oxides of transition metals such as Fe_{0.25}V_{0.75}S₂, Na_{0.1}CrS₂; composite sulfides of transition metals such as LiCoS₂ and LiNiS₂.

Among these, V₂O₅, V₅O₁₃, VO₂, Cr₂O₅, MnO₂, TiO, MoV₂O₃, LiCoO₂, LiNiO₂, LiMn₂O₄, TiS₂, V₂S₅, Cr_{0.25}V_{0.75}S₂, and Cr_{0.5}V_{0.5}S₂ are preferable, and LiCoO₂, LiNiO₂, LiMn₂O₄, and lithium transition metal composite oxides in which a part of these transition metals is replaced with other metals are particularly preferable. These positive electrode active materials may be used alone or in combination.

As the binder for binding the positive electrode active material, any known binder can be selected and used. Examples include inorganic compounds such as silicates and water glass, and resins without unsaturated bonds such as Teflon (registered trademark) and polyvinylidene fluoride. Among these, preferred are resins having no unsaturated bonds. When a resin having an unsaturated bond is used as the resin for binding the positive electrode active material, there is a risk of decomposition during the oxidation reaction (during charging). The weight average molecular weight of these resins is usually 10,000 or more, preferably 100,000 or more, and usually 3,000,000 or less, preferably 1,000,000 or less.

A conductive agent may be contained in the positive electrode active material layer in order to improve the conductivity of the electrode. The conductive agent is not particularly limited as long as it can be mixed with the active material in an appropriate amount to impart conductivity. Examples of the conductive agent include carbon powders such as acetylene black, carbon black, and graphite, and various metal fibers, powders, and foils.

The positive electrode plate is formed by slurrying the positive electrode active material and the binder with a dispersant, applying the slurry onto the current collector, and drying it using the same method as in manufacturing the negative electrode of the present invention described above. As the current collector of the positive electrode, aluminum, nickel, stainless steel (SUS), etc. are used, but there is no limitation at all.

As the electrolyte, a nonaqueous electrolytic solution in which a lithium salt is dissolved in a nonaqueous solvent, or a nonaqueous electrolytic solution made into a gel-like, rubber-like, or solid sheet form using an organic polymer compound, etc., is used.

The nonaqueous solvent used in the nonaqueous electrolyte is not particularly limited, and can be appropriately selected and used from known nonaqueous solvents that have been proposed as solvents for nonaqueous electrolytes. Examples include chain carbonates such as diethyl carbonate, dimethyl carbonate, and ethylmethyl carbonate; cyclic carbonates such as ethylene carbonate, propylene carbonate, and butylene carbonate; chain ethers such as 1,2-dimethoxyethane; cyclic ethers such as tetrahydrofuran, 2-methyl tetrahydrofuran, sulfolane, and 1,3-dioxolane; chain esters such as methyl formate, methyl acetate, and methyl propionate; and cyclic esters such as γ-butyrolactone and γ-valerolactone.

These nonaqueous solvents may be used alone or in combination of two or more. In the case of a mixed solvent, a combination of a mixed solvent containing a cyclic carbonate and a chain carbonate is preferred. It is particularly preferable that the cyclic carbonate is a mixed solvent of ethylene carbonate and propylene carbonate because it can exhibit high ionic conductivity even at low temperatures and improves low-temperature charging load characteristics.

Among them, the content of propylene carbonate is preferably 2% by mass or more and 80% by mass or less, more preferably 5% by mass or more and 70% by mass or less, and even more preferably 10% by mass or more and 60% by mass or less, based on the entire nonaqueous solvent. When the content of propylene carbonate is lower than the above lower limit, the ionic conductivity at low temperatures will decrease. If the content of propylene carbonate is higher than the above upper limit, propylene carbonate solvated with Li ions co-inserts into the graphite phase of the negative electrode, causing delamination and deterioration of the graphite-based negative electrode active material, making it impossible to obtain sufficient capacity.

The lithium salt used in the nonaqueous electrolyte is also not particularly limited, and can be appropriately selected and used from among known lithium salts that are known to be usable for this purpose. Examples include halides such as LiCl and LiBr; perhalates such as LiClO₄ LiBrO₄ and LiClO₄; inorganic lithium salts such as inorganic fluoride salts such as LiPF₆, LiBF₄ and LiAsF₆; perfluoroalkanesulfonates such as LiCF₃SO₃ and LiC₄F₉SO₃; fluorine-containing organic lithium salts such as perfluoroalkanesulfonic acid imide salts such as Li trifluorosulfonimide ((CF₃SO₂)₂NLi). Among these, LiClO₄, LiPF₆ and LiBF₄ are preferred.

The lithium salts may be used alone or in combination of two or more. The concentration of lithium salt in the nonaqueous electrolyte is usually in the range of 0.5 mol/L or more and 2.0 mol/L or less.

When using an electrolyte in the form of a gel, rubber, or solid sheet by incorporating an organic polymer compound into the above-mentioned nonaqueous electrolyte, specific examples of the organic polymer compound include polyether polymer compounds such as polyethylene oxide and polypropylene oxide; crosslinked polymers of polyether polymer compounds; vinyl alcohol polymer compounds such as polyvinyl alcohol and polyvinyl butyral; insolubilized vinyl alcohol polymer compounds; polyepichlorohydrin; polyphosphazene; polysiloxane; vinyl polymer compounds such as polyvinylpyrrolidone, polyvinylidene carbonate, and polyacrylonitrile; and polymer copolymers such as poly(ω-methoxyoligooxyethylene methacrylate), poly(ω-methoxyoligooxyethylene methacrylate-co-methyl methacrylate) and poly(hexafluoropropylene - vinylidene fluoride).

The above-mentioned nonaqueous electrolyte may further contain a film forming agent. Specific examples of film forming agents include carbonate compounds such as vinylene carbonate, vinyl ethyl carbonate, and methylphenyl carbonate; alkenesulfides such as ethylene sulfide and propylene sulfide; and sultone compounds such as 1,3-propane sultone and 1,4-butane sultone; and acid anhydrides such as maleic anhydride and succinic anhydride.

Furthermore, an overcharge preventive agent such as diphenyl ether or cyclohexylbenzene may be added to the nonaqueous electrolyte.

When these additives are used, their content in the nonaqueous electrolyte is usually 10% by mass or less, preferably 8% by mass or less, more preferably 5% by mass or less, and particularly preferably 2% by mass or less. When the content of the above-mentioned additive is too large, there is a risk that other battery characteristics will be adversely affected, such as an increase in initial irreversible capacity and a decrease in low-temperature characteristics and rate characteristics.

As the electrolyte, a solid polymer electrolyte that is a conductor of alkali metal cations such as lithium ions can also be used. As the polymer solid electrolyte, examples include the above-mentioned polyether-based polymer compound in which a Li salt is dissolved, and a polymer in which the terminal hydroxyl group of polyether is substituted with an alkoxide.

A porous separator such as a porous membrane or nonwoven fabric is usually interposed between the positive electrode and the negative electrode to prevent short circuits between the electrodes. In this case, the nonaqueous electrolyte is used by impregnating to a porous separator. As the material for the separator, polyolefins such as polyethylene and polypropylene and polyether sulfone, etc. are used, and polyolefins are preferred.

The form of the lithium-ion secondary battery to which the present invention is applied is not particularly limited. Examples include a cylinder type in which a sheet electrode and a separator are formed into a spiral shape, a cylinder type in which a pellet electrode and a separator are combined to have an inside-out structure, and a coin type in which a pellet electrode and a separator are laminated.

By housing these types of batteries in any external case, they can be used in any shape such as a coin shape, a cylindrical shape, or a square shape.

The procedure for assembling a lithium-ion secondary battery is not particularly limited, and may be assembled using an appropriate procedure depending on the structure of the battery. For example, a negative electrode is placed on an exterior case, an electrolytic solution and a separator are provided thereon, a positive electrode is placed facing the negative electrode, and the battery is crimped together with a gasket and a sealing plate.

### <Performance of secondary battery>

The secondary battery of the present invention has excellent battery characteristics by using the particles of the present invention as a negative electrode active material.

Specifically, it is preferable that the initial discharge capacity measured by the method described in the Examples section below is 400 mAh/g or more, and the charge/discharge efficiency is 80% or more.

The secondary battery of the present invention preferably has a discharge capacity of 400 mAh/g or more at the 50th cycle measured by the method described in the Examples section below, and a charge/discharge efficiency of 99.85% or more..

### Example

Next, specific embodiments of the present invention will be explained in more detail with reference to Examples. The invention is not limited to these Examples.

### [Measuring method]

The methods for measuring the physical properties of the materials used in the following Examples and Comparative Examples are as follows.

### <Volume-average particle size (d₅₀) >

Approximately 20 mg of particles were added to approximately 1 ml of a 2 volume % aqueous solution of polyoxyethylene (20) sorbitan monolaurate, and this was dispersed in approximately 200 ml of ion-exchanged water. The volume particle size distribution was measured using a laser diffraction particle size distribution analyzer (manufactured by Horiba, Ltd., model name "LA-920") about this disoersion, and the median diameter (d₅₀) was determined. The measurement conditions were: ultrasonic dispersion for 1 minute, ultrasonic intensity of 2, circulation speed of 2, and relative refractive index of 1.50.

### <Particle size (d₉₀) >

The particle size corresponding to 90% cumulatively from the small particle side in the particle size distribution obtained by measuring the volume-average particle size (d₅₀) was defined as the particle size (d₉₀).

### <Maximum particle size (dₘₐₓ)>

The maximum diameter in the particle size distribution obtained by measuring the volume-average particle size (d₅₀) was defined as the maximum particle size (dmax).

### <Chromaticity a*,Chromaticity b*>

In accordance with ISO7724/1, chromaticity a* and chromaticity b* in the L*a*b* color system were measured using a spectrophotometer (manufactured by Konica Minolta, Inc., model name "CM-5"). The measurement method was an SCI (specular reflection included) method that measures color without removing specular reflection light.

### <Value of x in SiOₓ>

The values of x in SiOₓ of Si-containing particles (B) Nos. 1 to 9 were calculated from values measured by impulse furnace heating extraction-IR detection method and ICP emission spectrometry under an inert gas atmosphere.

Specifically, a sample was melted with an alkali, and the silicon content of the diluted sample solution after constant volume was measured using ICP-AES (manufactured by Thermo Fisher Scientific, model name "iCAP7600Duo"). Separately, the oxygen content of the sample was measured using an oxygen nitrogen hydrogen analyzer (manufactured by LECO Corporation, model name "TCH600 type"). The amount of oxygen relative to silicon was calculated and set as the value of x in SiOₓ.

### <Specific surface area by BET method>

Using a specific surface area measuring device (manufactured by Mountec Co, Ltd., model name: "MacSorb HM Model-1210"), the sample was filled into a dedicated cell, heated to 150°C for pretreatment, and then cooled to liquid nitrogen temperature. Accurately adjusted gas with about 30% nitrogen and a balance of helium was adsorbed to saturation, then the sample was heated to room temperature, the amount of desorbed gas was measured, and the specific surface area was calculated from the obtained amount of adsorption by BET one-point method analysis.

### <Tap density>

Using a powder density measuring device (manufactured by Seishin Enterprise Co., Ltd., model name "Tap Denser KYT-5000"), the sample was dropped through a sieve having an opening of 300 µm into a cylindrical tap cell having a diameter of 1.5 cm and a volumetric capacity of 20 cm³ and filled the cell completely. Thereafter, tapping with a stroke length of 10 mm was performed 1000 times, and the density calculated from the volume at that time and the mass of the sample was defined as the tap density.

### [Synthesis Example 1]

A mixture of silicon dioxide powder and metal silicon powder was heated to 1000°C or higher under reduced pressure, the generated SiOₓ gas was cooled and precipitated. SiOₓ powder was obtained by passing the precipitate through a coarse pulverization process. The SiOₓ powder was subjected to a dry-pulverization using a ball mill, whereby Si-containing particles (B) No. 1 were obtained. The value of x in SiOₓ and the d₅₀, dₘₐₓ, chromaticity a* and chromaticity b* of the particles are as shown in Table 1.

### [Synthesis Examples 2 to 4, 6, Comparative Synthesis Examples 1 and 2]

In Synthesis Example 1, instead of dry pulverization, wet pulverization was performed using a bead mill of a compatible with microbeads-type using 2-propanol as a dispersion solvent, and Si-containing particles (B) No. 2-4, 6, 8, and 9 were obtained. The value of x in SiOₓ, d₅₀, dₘₐₓ, chromaticity a* and chromaticity b* of the particles are shown in Table 1.

### [Synthesis Example 5]

Particles having d₅₀ of 0.05 µm produced by vapor phase plasma synthesis using metal silicon powder as a raw material were processed into Si-containing particles (B) No. 5 without pulverizing them. The x in SiOₓ, d₅₀, dₘₐₓ, chromaticity a* and chromaticity b* of Si-containing particles (B) No. 5 are shown in Table 1.

### [Synthesis example 7]

In Synthesis Example 1, without dry pulverization using a ball mill, Si-containing particles (B) No. 7 was prepared. The x in SiOₓ, d₅₀, dₘₐₓ, chromaticity a*, and chromaticity b* of the values are shown in Table 1.

**[Table 1]**

| | x value in SiOx | Pulverizing method | d₅₀ [*µ*m] | dₘₐₓ [*µ*m] | a* | b* | Particles (B) No. |
|---|---|---|---|---|---|---|---|
| Synthesis Example 1 | 0.90 | Dry | 0.5 | 1.7 | 10.56 | 21.44 | 1 |
| Synthesis Example2 | 0.90 | Wet | 0.5 | 1.5 | 10.04 | 19.23 | 2 |
| Synthesis Example3 | 0.90 | Wet | 0.5 | 1.5 | 10.04 | 19.23 | 3 |
| Synthesis Example4 | 0.90 | Wet | 0.5 | 1.5 | 10.04 | 19.23 | 4 |
| Synthesis Example5 | 0.20 | Wet | 0.05 | 1.5 | 4.61 | 17.86 | 5 |
| Synthesis Example6 | 0.90 | Wet | 0.5 | 1.5 | 10.04 | 19.23 | 6 |
| Synthesis Example7 | 0.94 | Not Pulverized | 1.7 | 19.9 | 12.40 | 21.20 | 7 |
| Comparative Synthesis Example1 | 0.90 | Wet | 0.5 | 1.5 | 10.04 | 19.23 | 8 |
| Comparative Synthesis Example 2 | 0.90 | Wet | 0.5 | 1.5 | 10.04 | 19.23 | 9 |

### [Examples 1 to 7, Comparative Examples 1 and 2]

### <Manufacture of particles>

As the graphite (A), flaky natural graphite having the following physical properties was used.
(Graphite (A) physical properties)
d₅₀: 11.1 µm
d₉₀: 21.1µm
Specific surface area by BET method: 9.9m²/g
Tap density: 0.44g/cm³

As the Si-containing particles (B), Si-containing particles (B) No. 1 to 9 synthesized in Synthesis Examples 1 to 7 and Comparative Synthesis Examples 1 and 2 were used.

The graphite (A), the Si-containing particles (B) shown in Table 2, and amorphous carbon were mixed at the mixing ratio shown in Table 2. Thereafter, composite processing was performed using any of the following composite methods A to C for the time shown in Table 2 to obtain particles for negative electrode active material.

Table 3 shows the values of chromaticity a* and chromaticity b* measured for the obtained particles for negative electrode active material.

### <Compositing method>

A: Graphite (A) and Si-containing particles (B) were mixed in the proportions shown in Table 2, and 9% by mass of liquid oil was added thereto as a granulating agent, followed by stirring and mixing using a stirring granulator. The obtained mixture was put into a hybridization system, and subjected to mechanical granulation and spheroidization for the time shown in Table 2 at a rotor circumferential speed of 85 m/sec. Furthermore, the liquid oil used as a granulating agent was removed by heat treatment to obtain spherical composite particles. The obtained spherical composite particles were mixed with pitch having an ash content of 0.02% by mass, a metal impurity amount of 20ppm by mass, and a Qi of 1% by mass as a graphite material precursor. The mixture was heat-treated at 1000 °C in an inert gas to obtain a heated product. By crushing and classifying this heated product, negative electrode active material particles were obtained. The graphite (A), Si-containing particles (B), and amorphous carbon were composited in the proportions shown in Table 2.
B: Negative electrode active material particles were obtained by the same method as the compositing method A, except that instead of the hybridization system, a powder granulation and spheroidization device having a high-speed rotating rotor with a large number of blades installed inside the casing was used.
C: Graphite (A) and Si-containing particles (B) were mixed in the proportions shown in Table 2, and further stirred and mixed using a stirring granulator to obtain negative electrode active material particles.

**[Table 2]**

| | Mixing amount of graphite (A) [mass%] | Particles (B) | | Mixing amount of amorphous carbon [mass%] | Composite meth od | Composite time [minutes] |
|---|---|---|---|---|---|---|
| | | Kinds (No. ) | Mixing amount [mass%] | | | |
| Example 1 | 70 | 1 | 16 | 14 | A | 5 |
| Example 2 | 70 | 2 | 16 | 14 | A | 5 |
| Examples | 70 | 3 | 16 | 14 | B | 20 |
| Example 4 | 70 | 4 | 16 | 14 | B | 30 |
| Example 5 | 77 | 5 | 6 | 17 | A | 5 |
| Example 6 | 70 | 6 | 16 | 14 | B | 10 |
| Example 7 | 70 | 7 | 16 | 14 | A | 5 |
| Comparative Example 1 | 84 | 8 | 16 | 0 | A | 5 |
| Comparative Example2 | 84 | 9 | 16 | 0 | C | - |

### <Manufacture of lithium-ion secondary battery>

Using each particle as a negative electrode active material, a lithium-ion secondary battery was manufactured as follows.

95 parts by mass of particles obtained in each Example and Comparative Example, 2.5 parts by mass of acetylene black as a conductive material, 1.5 parts by mass of carboxymethyl cellulose (CMC), and 3.1 parts by mass of the aqueous dispersion containing 48 % by mass of styrene-butadiene rubber (SBR) as a binder were kneaded using a hybridization mixer to form a slurry. This slurry was applied onto a rolled copper foil having a thickness of 20 µm using a blade method so as to have a basis weight of 7 to 8 mg/cm ² and was dried.

Thereafter, the negative electrode active material layer was roll pressed using a 250 mϕ roll press equipped with a load cell so that the density of the negative electrode active material layer was 1.6 to 1.7 g/cm³, punched out into a circular shape having a diameter of 12.5 mm, and vacuum dried at 90°C for 8 hours to obtain a negative electrode for evaluation.

A battery for a charge/discharge test was manufactured by stacking this negative electrode and a Li foil as a counter electrode with a separator impregnated with an electrolytic solution interposed therebetween. The electrolytic solution used was a mixture of ethylene carbonate/ethyl methyl carbonate/monofluoroethylene carbonate=3/6/1 (volume ratio) in which LiPF₆ was dissolved at a concentration of 1 mol/liter.

### <Evaluation of battery characteristics>

The battery characteristics of the obtained lithium secondary battery were evaluated using the following method, and the results are shown in Table 3.

### (Initial discharge capacity and charging/discharging efficiency)

First, the positive and negative electrodes of the battery for the charge/discharge test were charged to 5 mV at a current density of 0.08 mA/cm², and further charged at a constant voltage of 5 mV until the current value reached 0.03 mA. After doping with lithium into the negative electrode, the positive electrode and negative electrode were discharged to 1.5 V at a current density of 0.2 mA/cm² (initial first cycle). Thereafter, charging and discharging were repeated four times under the same conditions as above, except that the current density during charging was 0.2 mA/cm² and the current density during discharging was 0.3 mA/cm² (initial 2nd cycle to initial 5th cycle). "Charging" refers to passing a current in a direction in which lithium is doped into the negative electrode for evaluation, and "discharging" refers to passing a current in a direction in which lithium is dedoped from the negative electrode for evaluation.

The initial discharge capacity was determined as follows.

First, the mass of the negative electrode active material was determined by subtracting the mass of a copper foil punched to the same area as the negative electrode from the mass of the negative electrode. The initial discharge capacity per mass was determined by dividing the initial 5th cycle discharge capacity by this mass of the negative electrode active material.

The charge/discharge efficiency was determined using the following formula. The mass of the negative electrode active material was determined by subtracting the mass of a copper foil punched to the same area as the negative electrode from the mass of the negative electrode. Charge/discharge efficiency (%) = {discharge capacity at initial 3rd cycle (mAh/g)/(charge capacity at initial 1st cycle (mAh/g) + charge capacity at initial 2nd cycle (mAh/g) - discharge capacity at initial 2nd cycle (mAh/g) + charge capacity at initial 3rd cycle (mAh/g) - discharge capacity at initial 3rd cycle (mAh/g))}×100

### (50th cycle discharge capacity and charge/discharge efficiency)

After the above initial charging and discharging, the battery was further charged and discharged 50 times (1st cycle to 50th cycle). Except for the 25th and 50th cycles, the same conditions as the initial 1st cycle were used except that the current density during charging was 0.2 mA/cm² and the current density during discharging was 0.3 mA/cm². In the 25th cycle and the 50th cycle, the same conditions as in the initial 2nd cycle were used.

The discharge capacity at the 50th cycle was determined by dividing the discharge capacity at the 50th cycle by the mass of the negative electrode active material. The 50th cycle charge/discharge efficiency was determined by the following formula. Charge-discharge efficiency (%) = {discharge capacity at 50th cycle (mAh/g)/charge capacity at 50th cycle) (mAh/g)} x 100

**[Table 3]**

| | Chromaticity of particle | | Initial battery characteristics | | 50th cycle battery characteristics | |
|---|---|---|---|---|---|---|
| | a | b* | Discharge capacity [mAh/g] | Charge/discharge efficiency [%] | Discharge capacity [mAh/g] | Charge/discharge efficiency [%] |
| Example 1 | 0.60 | 0.96 | 455 | 82.7 | 444 | 99.87 |
| Example2 | 0.54 | 0.98 | 450 | 83.0 | 443 | 99.89 |
| Example3 | 0.64 | 0.98 | 446 | 82.5 | 438 | 99.88 |
| Example4 | 0.63 | 0.97 | 447 | 82.3 | 440 | 99.87 |
| Example5 | 0.56 | 0.76 | 443 | 85.4 | 435 | 99.92 |
| Example6 | 0.65 | 1.20 | 438 | 79.8 | 433 | 99.87 |
| Example7 | 0.66 | 1.30 | 443 | 80.2 | 414 | 99.81 |
| Comparative Example1 | 1.31 | 2.84 | 436 | 76.7 | 368 | 99.81 |
| Comparative Example2 | 2.15 | 5.98 | 421 | 76.5 | 358 | 99.89 |

From Table 3, it can be seen that a secondary battery having excellent battery characteristics can be provided by using particles containing graphite (A) and Si-containing particles (B) and having a chromaticity b* of 2.0 or less as a negative electrode active material.

Although the present invention has been described in detail using specific embodiments, it will be apparent to those skilled in the art that various changes can be made without departing from the spirit and scope of the present invention.

This application is based on Japanese Patent Application No. 2021-175655 filed on October 27, 2021, and the entire of which is incorporated herein by reference.

## Claims

1. Particles having a chromaticity b* of 2.0 or less, the particles comprising graphite (A) and particles (B) containing a silicon element.

2. The particles according to claim 1, wherein the chromaticity b* is 1.1 or less.

3. The particles according to claim 1 or 2, wherein the chromaticity b* is 0.2 or more.

4. The particles according to any one of claims 1 to 3, having a chromaticity a* of 1.2 or less.

5. The particles according to any one of claims 1 to 4, having a chromaticity a* of 0.2 or more.

6. The particles according to any one of claims 1 to 5, wherein the particles (B) containing a silicon element have a d₅₀ of 0.3 µm or more.

7. The particles according to any one of claims 1 to 6, wherein the particles (B) containing a silicon element are SiOx in which x is in the range of 0.5 to 1.5.

8. The particles according to any one of claims 1 to 7, wherein the particles is used in a secondary battery.

9. A method for producing particles having a chromaticity b* of 2.0 or less, comprising compositing graphite (A) and particles (B) containing a silicon element.

10. The method for producing particles according to claim 9, wherein the graphite (A) and the particles (B) containing a silicon element are mixed and then subjected to a spheroidization treatment.

11. A secondary battery including a positive electrode, a negative electrode, and an electrolyte,
wherein the negative electrode comprises a current collector and a negative electrode active material layer disposed on the current collector, and
wherein the negative electrode active material layer contains the particles according to any one of claims 1 to 8.

12. A method for manufacturing a secondary battery including a positive electrode, a negative electrode, and an electrolyte,
Wherein the method comprises a step of forming a negative electrode active material layer containing the particles according to any one of claims 1 to 8 on a current collector to produce the negative electrode.
